# EUROPEAN PATENT APPLICATION

(11) **EP 4 391 207 A1**
(43) Date of publication of application: **26.06.2024**
(21) Application number: 22899002.4
(22) Date of filing: 23.11.2022
(51) Int. Cl.: H01M 50/54, B23K 37/04

(54) **MULTIPURPOSE JIG FOR MANUFACTURING RECHARGEABLE BATTERY AND SETTING METHOD OF MANUFACTURING APPARATUS USING SAME**

(30) Priority: 26.11.2021 KR 20210165250
(71) Applicant: LG Energy Solution, Ltd., Seoul 07335 (KR)
(72) Inventor: BAN, Jeongjin, Daejeon 34122 (KR); CHO, Sunmin, Daejeon 34122 (KR)
(74) Representative: Plasseraud IP
(86) International application number: PCT/KR2022/018555
(87) International publication number: WO 2023/096320

(57) **Abstract**

A multipurpose jig for setting of a manufacturing apparatus of a rechargeable battery according to an embodiment of the present invention includes: a main body that includes a first reference face for setting the manufacturing apparatus; and a protrusion that protrudes from one side of the main body and includes a second reference face for setting the manufacturing apparatus. The main body and the protrusion are a single body, a thickness of the main body is greater than a thickness of the protrusion, and the first reference face and the second reference face are connected.

## Description

### [Technical Field]

### Cross-reference to related application(s)

This application claims priority to and the benefit of Korean Patent Application No. 10-2021-0165250 filed in the Korean Intellectual Property Office on November 26, 2021, the entire contents of which are incorporated herein by reference.

The present invention relates to a multipurpose jig, and more specifically, to a jig that may be used for setting an apparatus for manufacturing a rechargeable battery. The present invention also relates to a method for setting an apparatus for manufacturing the rechargeable battery using the jig.

### [Background Art]

In general, a rechargeable battery has a configuration in which an electrode assembly including a positive electrode, a negative electrode, and a separator interposed between the positive electrode and the negative electrode is accommodated in a can or a case of a pouch shape.

For example, when the rechargeable battery is manufactured as a pouch type, the rechargeable battery may be manufactured by a pre-welding process in which electrode tabs of a plurality of positive electrodes are connected to each other and electrode tabs of a plurality of negative electrodes are connected to each other, a cutting process in which the pre-welded electrode tab is cut to a predetermined length, a main-welding process in which the cut electrode tab is welded to a lead, and the like.

An apparatus for manufacturing the rechargeable battery has to accurately set a configuration of the rechargeable battery to be manufactured (e.g., a position of a welding portion in consideration of positions of the plurality of tabs to be welded in a stacked electrode assembly), so that the apparatus may produce a good rechargeable battery.

Typically, this setting is performed using an actual rechargeable battery.

However, when the actual product is used, the rechargeable battery may be easily deformed according to a surrounding environment, and thus a setting operation is not easy.

Accordingly, a sample of the rechargeable battery for the setting operation has to be frequently replaced, and in this case, a manufacturing time for the rechargeable battery is increased and a manufacturing cost for the rechargeable battery is highly likely to increase.

### [Disclosure]

### [Technical Problem]

A problem to be solved by the present invention is to provide a multipurpose jig for manufacturing a rechargeable battery and a setting method of a manufacturing apparatus using the same capable of conveniently and accurately performing setting of the manufacturing apparatus of the rechargeable battery while continuously performing the setting.

However, the problem to be solved by embodiments of the present invention is not limited to the above-described problem, and may be variously expanded in the range of the technical ideas included in the present invention.

### [Technical Solution]

A multipurpose jig for setting of a manufacturing apparatus of a rechargeable battery according to an embodiment of the present invention includes: a main body that includes a first reference face for setting the manufacturing apparatus; and a protrusion that protrudes from one side of the main body and includes a second reference face for setting the manufacturing apparatus. The main body and the protrusion are a single body, a thickness of the main body is greater than a thickness of the protrusion, and the first reference face and the second reference face are connected.

Each of the main body and the protrusion may have a rectangular parallelepiped shape, the first reference face may be one of opposite narrow faces of the main body, and the second reference face may be one of opposite wide faces of the protrusion.

A position of the second reference face with respect to the first reference face may correspond to positions of positive electrode tabs connected to a plurality of positive electrodes included in the rechargeable battery or positions of negative electrode tabs connected to a plurality of negative electrodes included in the rechargeable battery.

The protrusion may be disposed only at a portion of an edge of a narrow face of the main body.

A working handle may be provided at an edge of the main body opposite to the protrusion.

The multipurpose jig may include a resin.

The multipurpose jig may be manufactured by a 3D printer.

A setting method for a manufacturing apparatus of a rechargeable battery according to an embodiment of the present invention includes: setting a position of a setting portion of the manufacturing apparatus by moving the multipurpose jig to the setting portion so that the setting portion is in close contact with the second reference face.

The setting portion may be a welding table for welding and connecting the positive electrode tabs connected to the plurality of positive electrodes included in the rechargeable battery or the negative electrode tabs connected to the plurality of negative electrodes included in the rechargeable battery.

The setting method may further include setting a height of a guide jig that guides the positive electrode tabs or the negative electrode tabs and is adjacent to the welding table by allowing the guide jig to be in close contact with the protrusion when the multipurpose jig is moved.

The setting portion may be a cutter cutting the positive electrode tabs connected to the plurality of positive electrodes included in the rechargeable battery or the negative electrode tabs connected to the plurality of negative electrodes included in the rechargeable battery.

The setting portion may be a laser support on which a laser for welding a lead to positive electrode tabs connected to a plurality of positive electrodes included in the rechargeable battery or negative electrode tabs connected to a plurality of negative electrodes included in the rechargeable battery is mounted.

### [Advantageous Effects]

A multipurpose jig for setting of a manufacturing apparatus of a rechargeable battery according to an embodiment enables an operator (or a worker) to set various portions of the manufacturing apparatus with one jig. Accordingly, a time for setting the manufacturing apparatus of the rechargeable battery may be shortened so that work productivity is improved.

In addition, the rechargeable battery manufactured according to the embodiment may be manufactured as a high-quality product without a manufacturing defect by the apparatus that is always set constantly.

Effects of the present invention are not limited to the foregoing effects, and other non-mentioned effects will be clearly understood by those skilled in the art from the description below.

### [Description of the Drawings]

FIG. 1 is a perspective view illustrating a multipurpose jig for setting of a manufacturing apparatus of a rechargeable battery according to a first embodiment of the present invention.
FIG. 2 is a perspective view illustrating a multipurpose jig for setting of a manufacturing apparatus of a rechargeable battery according to a second embodiment of the present invention.
FIG. 3 is a view illustrating a first use example in which the multipurpose jig of FIG. 1 is used at a setting portion of the manufacturing apparatus of the rechargeable battery.
FIG. 4 is a schematic view for describing a process in which an electrode tab of the rechargeable battery is welded by a welding apparatus through a guide jig according to an embodiment of the present invention.
FIG. 5 and FIG. 6 are schematic views for describing a method for setting the setting portion of the manufacturing apparatus of the rechargeable battery using the multipurpose jig according to the first use example of the present invention.
FIG. 7 is a view illustrating a second use example in which the multipurpose jig of FIG. 1 is used at the setting portion of the manufacturing apparatus of the rechargeable battery.
FIG. 8 is a view illustrating a third use example in which the multipurpose jig of FIG. 1 is used at the setting portion of the manufacturing apparatus of the rechargeable battery.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

Parts that are irrelevant to the description are omitted in the drawings for clear description of the present invention, and like reference numerals designate like elements throughout the specification.

Further, the size and thickness of the elements shown in the drawings are arbitrarily illustrated for better understanding and ease of description, and the present invention is not necessarily limited thereto. In the drawings, the thickness of layers, films, panels, regions, etc., are exaggerated for clarity. In the drawings, for convenience of description, the thickness of layers, films, panels, areas, etc., are exaggerated.

It will be understood that when an element such as a layer, film, region, or substrate is referred to as being "on" or "above" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

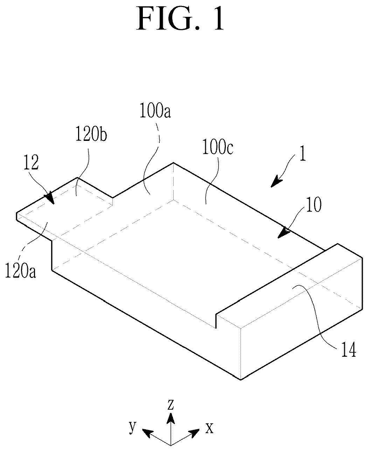

FIG. 1 is a perspective view illustrating a multipurpose jig for setting of a manufacturing apparatus of a rechargeable battery according to an embodiment of the present invention.

The multipurpose jig according to the embodiment is one jig, and may be configured to set various portions of the manufacturing apparatus of the rechargeable battery. The manufacturing apparatus of the rechargeable battery according to an embodiment may be an apparatus for manufacturing a pouch type of rechargeable battery. For example, the manufacturing apparatus of the rechargeable battery may be an apparatus for performing a so-called pre-welding process in which a plurality of positive electrode tabs or negative electrode tabs respectively provided to a plurality of positive electrodes or negative electrodes included in an electrode assembly are fixed by welding in the pouch type of rechargeable battery, a cutting process in which a portion of the welded positive electrode tab or negative electrode tab is cut, or so-called main-welding process in which the cut positive electrode tab or negative electrode tab is welded to a lead.

FIG. 1 is a perspective view illustrating the multipurpose jig 1 according to a first embodiment. As shown in FIG. 1, the multipurpose jig 1 includes a main body 10 and a protrusion 12.

Each of the main body 10 and the protrusion 12 has a rectangular parallelepiped shape, and the multipurpose jig 1 may include a single body where the main body 10 and the protrusion 12 are integrally formed with each other.

A thickness of the main body 10 is thicker than a thickness of the protrusion 12. That is, the main body 10 has a larger volume than the protrusion 12. The protrusion 12 may have a protruding structure extending from an edge of one side of the main body 10 in a longitudinal direction y of the main body 10.

Since the main body 10 has a rectangular parallelepiped shape, one of opposite narrow faces of the main body 10 (i.e., the narrow face (or a narrow side face) of a side from which the protrusion 12 extends) 100a, serves as a first reference face for setting a setting portion of the manufacturing apparatus.

Since the protrusion 12 also has an external shape of a rectangular parallelepiped, one of opposite wide faces of the protrusion 12 (i.e., the wide face (or a lower face) of a side facing a lower portion in FIG. 1) 120a, serves as a second reference face for setting the setting portion of the manufacturing apparatus.

In the multipurpose jig 1 of FIG. 1, the narrow face 100a of the main body 10 is connected to the wide face 120a of the protrusion 12 so that an angle between the narrow face 100a and the wide face 120a is a right angle.

A position of the wide face (the second reference face) 120a of the protrusion 12 with respect to the narrow face (the first reference face) 100a of the main body 10 may be set to correspond to positions of the positive electrode tabs connected to the plurality of positive electrodes included in the rechargeable battery to be manufactured or the negative electrode tabs connected to the plurality of negative electrodes included in the rechargeable battery to be manufactured.

In addition, in the multipurpose jig 1 according to the embodiment, the protrusion 12 has a structure in which the protrusion 12 does not protrude from an entire edge of the narrow face 100a of the main body 10 but protrudes from only a portion of an edge of the narrow face 100a of the main body 10. Accordingly, a remaining edge of the narrow face 100a of the main body 10 where the protrusion 12 is not provided may act as a portion for securing an operator's field of view for a setting operation (or setting work) of an operator. The portion for securing the operator's field of view will be described in more detail later.

The multipurpose jig 1 configured as described above may correspond to the electrode assembly in which a plurality of positive electrodes, negative electrodes, and separators are stacked in the pouch type of rechargeable battery or may correspond to a pouch accommodating the electrode assembly, and the protrusion 12 may correspond to an electrode tab provided in the electrode assembly. That is, an external shape of the multipurpose jig 1 may be similar to that of the pouch type of rechargeable battery.

In the embodiment of FIG. 1, the protrusion 12 protrudes from the main body 10 so that the other wide face 120b opposite to the wide face 120a is disposed on the same plane as a one (100c) of opposite wide faces of the main body 10, but the present invention is not necessarily limited to this configuration.

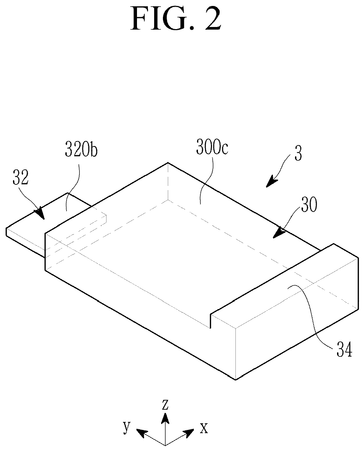

For example, a multipurpose jig 3 of a second embodiment shown in FIG. 2 has the same basic configuration as the multipurpose jig 1 of FIG. 1, but in the multipurpose jig 3, a protrusion 32 protrudes from a main body 30 so that there is a step difference between a wide face 320b of the protrusion 32 and a wide face 300c of the main body 30.

The multipurpose jig 1 shown in FIG. 1 may be applied when a so-called 1 cup cell type of rechargeable battery having one pouch in the pouch type of rechargeable battery is manufactured, and the multipurpose jig 3 shown in FIG. 2 may be applied to a so-called 2 cup cell type of rechargeable battery in which a pouch is divided into two parts in the pouch type of rechargeable battery.

In addition, the multipurpose jigs 1 and 3 according to the embodiments of FIGS. 1 and 2 may include working handles 14 and 34 disposed along edges of the main body 10 and 30 opposite to the protrusions 12 and 32, respectively.

The multipurpose jigs 1 and 3 of the embodiments configured as described above may be manufactured by a 3 dimension (3D) printer, and a material of each of the multipurpose jigs 1 and 3 includes a resin. Accordingly, the multipurpose jigs 1 and 3 may be manufactured with a light weight.

The multipurpose jig according to the embodiment may be used for setting the manufacturing apparatus of the rechargeable battery as the following use example.

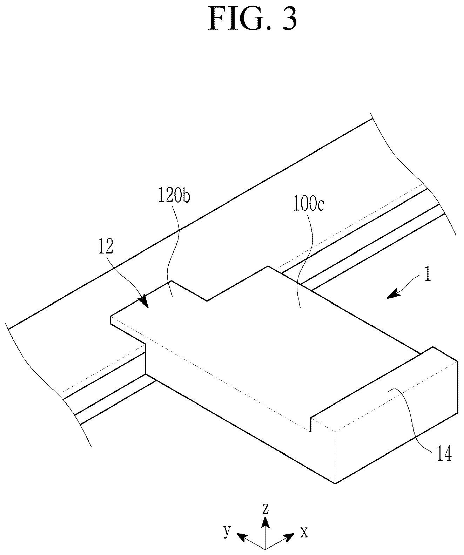

FIG. 3 is a view illustrating a first use example in which the multipurpose jig 1 of FIG. 1 is used at a setting portion of the manufacturing apparatus of the rechargeable battery.

The manufacturing apparatus of the rechargeable battery shown in FIG. 3 may be a pre-welding apparatus for welding and connecting the plurality of positive electrode tabs or negative electrode tabs respectively connected to the plurality of positive electrodes or negative electrodes included in the electrode assembly of the pouch type of rechargeable battery, and a portion set by the multipurpose jig 1 in the pre-welding apparatus may be a welding table (or an anvil) 40.

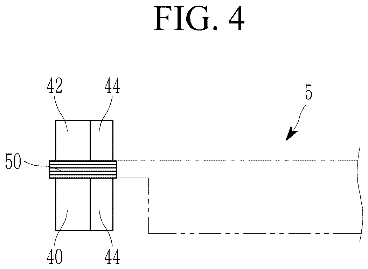

As shown in FIG. 4, the positive electrode tab (or the negative electrode tab) 50 (hereinafter referred to as the positive electrode tab for convenience) of the pouch type of rechargeable battery 5 is disposed on the welding table 40, and a welding machine (or a horn) 42 descends to weld the positive electrode tab 50. In order to weld the positive electrode tab 50 at a regular position of the positive electrode tab 50, it is important that the welding table 40 is set at a regular position of the welding table 40.

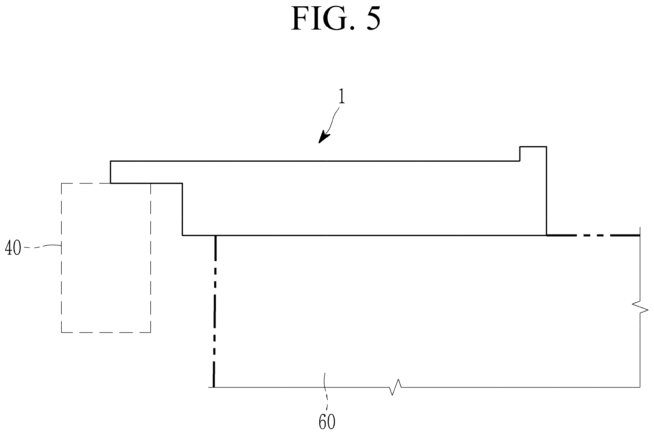

Referring to FIG. 5, to set the welding table 40 at the regular position of the welding table 40, the operator moves the multipurpose jig 1 toward the welding table 40 using the handle 14 of the multipurpose jig 1 in a state in which the multipurpose jig 1 is disposed on a worktable 60, so that the welding table 40 is set by adjusting a position (e.g., a height) of the welding table 40 so that an upper face of the welding table 40 contacts the wide face (the second reference face) 120a of the protrusion 12 of the multipurpose jig 1. If necessary, the narrow face (the first reference face) 100a of the main body 10 of the multipurpose jig 1 may also come into contact with a support portion of the welding apparatus in contact with the welding table 40. Here, a position (e.g., a height) of the worktable 60 may be maintained the same as that of a worktable for lamination and stacking (L&S) that forms the positive electrode or the negative electrode and is a process prior to the pre-welding process.

When the positive electrode tab 50 is welded, the protrusion 12 of the multipurpose jig 1 may also serve to set a guide jig 44 that gathers a plurality of positive electrode tabs 50.

Referring to FIG. 4, the guide jig 44 adjacent to the welding table 40 and the welding machine 42 serves to guide the positive electrode tabs 50 to be gathered in one place, and it is necessary for good welding of the positive electrode tab 50 that the guide jig 44 is also set at a regular position of the guide jig 44. In consideration of this, a thickness of the protrusion 12 may be set according to an interval between guide jigs 44, and when the welding table 40 is set, the interval between the guide jigs 44 may also be set according to the thickness of the protrusion 12.

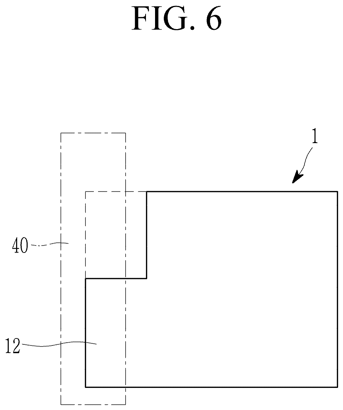

On the one hand, as described above, since the protrusion 12 of the multipurpose jig 1 is disposed only at a portion of the edge of the main body 10, as shown in FIG. 6, a portion of the welding table 40 that is not covered by the protrusion 12 may be exposed in a state where the multipurpose jig 1 is moved toward the welding table 40 to set the welding table 40. Through the exposed portion, the operator may secure a field of view when the welding table 40 is set. Accordingly, the operator may easily perform a setting operation of the welding table 40 using the multipurpose jig 1.

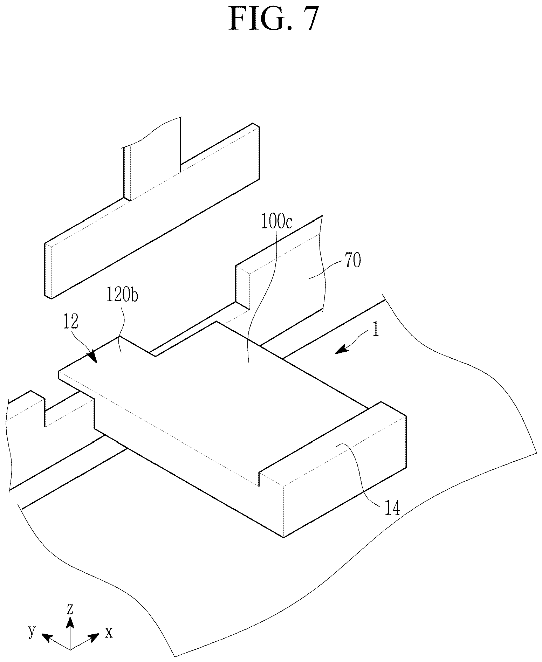

FIG. 7 is a view illustrating a second use example in which the multipurpose jig 1 of FIG. 1 is used at the setting portion of the manufacturing apparatus of the rechargeable battery.

The manufacturing apparatus of the rechargeable battery shown in FIG. 7 is a cutting apparatus for cutting the plurality of positive electrode tabs or the plurality of negative electrode tabs welded through the pre-welding apparatus shown in FIG. 6 to a predetermined length. In the cutting apparatus, a portion set by the multipurpose jig 1 may be a lower cutter 70 among cutters.

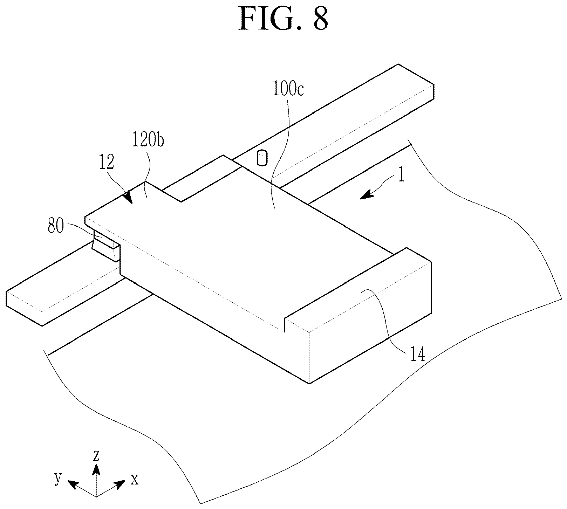

FIG. 8 is a view illustrating a third use example in which the multipurpose jig 1 of FIG. 1 is used at the setting portion of the manufacturing apparatus of the rechargeable battery.

The manufacturing apparatus of the rechargeable battery shown in FIG. 8 is a main welding apparatus for welding the lead to the positive electrode tab or the negative electrode tab cut through the cutting apparatus shown in FIG. 7. In the main welding apparatus, a portion set by the multipurpose jig 1 may be a support 80 at which a lower laser among welding lasers is installed.

Setting of the lower cutter 70 and the support 80 may also be performed like the setting of the welding table 40 described above by moving the multipurpose jig 1 to the lower cutter 70 and the support 80.

As described above, the multipurpose jig according to the embodiment of the present invention may easily and quickly set various portions requiring setting in the manufacturing apparatus of the rechargeable battery using a single jig.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

### <Description of symbols>

1, 3: multipurpose jig
10: main body
12: protrusion
14: handle

## Claims

1. A multipurpose jig for setting of a manufacturing apparatus of a rechargeable battery, comprising:
a main body that includes a first reference face for setting the manufacturing apparatus; and
a protrusion that protrudes from one side of the main body and includes a second reference face for setting the manufacturing apparatus,
wherein the main body and the protrusion are a single body, a thickness of the main body is greater than a thickness of the protrusion, and the first reference face and the second reference face are connected.

2. The multipurpose jig of claim 1, wherein each of the main body and the protrusion has a rectangular parallelepiped shape, the first reference face is one of opposite narrow faces of the main body, and the second reference face is one of opposite wide faces of the protrusion.

3. The multipurpose jig of claim 2, wherein a position of the second reference face with respect to the first reference face corresponds to positions of positive electrode tabs connected to a plurality of positive electrodes included in the rechargeable battery or positions of negative electrode tabs connected to a plurality of negative electrodes included in the rechargeable battery.

4. The multipurpose jig of claim 2, wherein the protrusion is disposed only at a portion of an edge of a narrow face of the main body.

5. The multipurpose jig of claim 2, wherein a working handle is provided at an edge of the main body opposite to the protrusion.

6. The multipurpose jig of claim 1, wherein the multipurpose jig includes a resin.

7. The multipurpose jig of claim 1, wherein the multipurpose jig is manufactured by a 3D printer.

8. A setting method for a manufacturing apparatus of a rechargeable battery using the multipurpose jig according to any one of claims 1 to 7, comprising setting a position of a setting portion of the manufacturing apparatus by moving the multipurpose jig to the setting portion so that the setting portion is in close contact with the second reference face.

9. The setting method of claim 8, wherein the setting portion is a welding table that welds and connects positive electrode tabs connected to a plurality of positive electrodes included in the rechargeable battery or negative electrode tabs connected to a plurality of negative electrodes included in the rechargeable battery.

10. The setting method of claim 8, further comprising setting a height of a guide jig that guides the positive electrode tabs or the negative electrode tabs and is adjacent to the welding table by allowing the guide jig to be in close contact with the protrusion when the multipurpose jig is moved.

11. The setting method of claim 8, wherein the setting portion is a cutter cutting positive electrode tabs connected to a plurality of positive electrodes included in the rechargeable battery or negative electrode tabs connected to a plurality of negative electrodes included in the rechargeable battery.

12. The setting method of claim 8, wherein the setting portion is a laser support on which a laser for welding a lead to positive electrode tabs connected to a plurality of positive electrodes included in the rechargeable battery or negative electrode tabs connected to a plurality of negative electrodes included in the rechargeable battery is mounted.
